# EUROPÄISCHE PATENTSCHRIFT

(11) **EP 0 573 852 B1**
(45) Veröffentlichungstag und Bekanntmachung des Hinweises auf die Patenterteilung: **17.12.1997**
(21) Anmeldenummer: 93108579.9
(22) Anmeldetag: 27.05.1993
(51) Int. Cl.: C08B 11/193, C08B 11/10, C04B 24/38

(54) **Sulfoalkylgruppenhaltige Alkylhydroxyalkylcelluloseether**
Sulphoalkyl groups containing alkyl hydroxyalkyl cellulose ether
Alkylhydroxyalkylcellulose contenant des groupes sulfoéthyle

(30) Priorität: 06.06.1992 DE 4218738
(43) Veröffentlichungstag der Anmeldung: 15.12.1993
(73) Patentinhaber: Clariant GmbH, 65929 Frankfurt am Main (DE)
(72) Erfinder: Bartz, Uwe, W-6227 Oestrich-Winkel (DE); Dönges, Reinhard, Dr., W-6232 Bad Soden/Ts. (DE); Klehr, Heiner, W-6500 Mainz (DE)

(56) Entgegenhaltungen:
- EP-A- 0 319 867
- EP-A- 0 470 444
- EP-A- 0 487 988
- GB-A- 2 138 014
- US-A- 2 795 508
- US-A- 3 357 971

## Beschreibung

Handelsübliche Celluloseether sind in der Regel wasserlösliche Verbindungen, die durch Veretherung von Cellulose in alkalischer Lösung hergestellt werden. Gebräuchliche Veretherungsreagenzien sind z.B. Alkylhalogenide, Alkylenoxide und Halogencarbonsäuren.

Zahlreiche Celluloseether dienen als Hilfsstoffe in technischen Anwendungsgebieten und finden vor allem in Baustoffgemischen, wie Putzen, Klebern und Spachtelmassen, als Verdicker, Wasserrückhaltemittel, Filmbildner und Viskositätsgeber Verwendung. Unter dem Wasserrückhaltevermögen wird die Fähigkeit verstanden, das im angemischten Baustoffgemisch enthaltene Wasser verzögert abzugeben. Durch Zugabe von Celluloseethern zu Baustoffgemischen wird die Abgabegeschwindigkeit des Wassers in den Untergrund reduziert und das Wasser steht für ein gleichmäßiges Abbinden und Erhärten des Baustoffgemisches zur Verfügung. In Putzen, Klebern und Spachtelmassen werden dadurch Schwund und Rißbildung verhindert sowie das Haftungsvermögen und die Verarbeitbarkeit verbessert.

Aus DE-A-39 10 730 ist der Einsatz von Celluloseethern, die neben Methyl- und Hydroxyalkylgruppen zusätzlich Carboxymethylgruppen enthalten, in Gipsmischungen bekannt. Diese Hilfsstoffe besitzen zwar ein verbessertes Wasserrückhaltevermögen bei erhöhter Temperatur, ihr Einsatz ist jedoch durch die Empfindlichkeit der Carboxylgruppen gegenüber Erdalkalimetallionen limitiert. In US-A-2 795 508 wird der Einsatz von Sulfoalkylcelluloseethern und deren Salzen als Zementabbindeverzögerer bei der Erdölexploration beschrieben. US-A-2 583 657 nennt die Verwendung von Alkylsulfoethylcelluloseethern und deren Salze als Wasserrückhaltemittel in Bohrlochzementierungsgemischen bei der Erdölexploration.

In EP-A 0 487 988 sind wasserlösliche Hydroxypropylsulfoethylcelluloseether mit niedrigem Substitutionsgrad offenbart.

Aus US-A 3,357,971 sind wasserlösliche Hydroxypropylsulfoalkylcelluloseether und deren Verwendung als Verdicker, als Stabilisator oder Oberflächenbehandlungsmittel bei erhöhter Temperatur, zum Beispiel in Farben, Klebstoffen und Nahrungsmitteln, bekannt.

GB-A-470,994 offenbart ein Verfahren zur Herstellung von Sulfoethylcelluloseethern und deren Mischethern, wie Methylsulfoethylcelluloseether und Hydroxyethylsulfoethylcelluloseether.

Trotz der bereits aus dem Stand der Technik bekannten Celluloseether besteht weiterhin ein Bedarf nach Celluloseethern, die sich durch verbesserte Eigenschaften im Hinblick auf eine möglichst hohe Flocktemperatur, eine gute Warmwasserlöslichkeit, eine geringe Empfindlichkeit gegenüber mehrwertigen Ionen und eine geringe Empfindlichkeit der Flocktemperatur gegenüber pH-Wert-Schwankungen auszeichnen.

Überraschenderweise hat sich gezeigt, daß die Alkylhydroxyalkylcelluloseether, die zusätzlich noch eine Sulfoalkylgruppe als Ethersubstituent enthalten, sich durch derartige verbesserte Eigenschaften auszeichnen.

Gegenstand der Erfindung sind Celluloseether, die wenigstens eine (C₁-C₃)-Alkylgruppe, wenigstens eine Hydroxyethyl- oder Hydroxypropylgruppe und wenigstens eine Sulfoethyl- oder Sulfopropylgruppe enthalten sowie eine DS_{Sulfoalkyl} von 0,004 bis 0,6 und einen MS_{Hydroxyalkyl} von 0,01 bis 1 besitzen.

Ein weiterer Gegenstand der Erfindung ist ein Verfahren zur Herstellung von Celluloseethern durch Veretherung von Cellulose in alkalischem Medium mit wenigstens einer eine (C₁-C₃)-Alkylgruppe übertragenden Verbindung, wenigstens einer eine Hydroxyethyl- oder Hydroxypropylgruppe übertragenden Verbindung und wenigstens einer eine Sulfoethyl- oder Sulfopropylgruppe übertragenden Verbindung, umfassend die Verfahrensschritte:
a) Alkalisierung der Cellulose,
b) während oder im Anschluß an a) Zugabe der Hydroxyethyl- bzw. Hydroxypropylgruppen übertragenden Verbindung,
c) gegebenenfalls im Anschluß an b) zusätzliche Zugabe von Alkalisierungsmittel und
d) während oder im Anschluß an b) oder gegebenenfalls c) Zugabe der (C₁-C₃)-Alklygruppen übertragenden Verbindung,
e) die Zugabe der Sulfoethyl- oder Sulfopropylgruppen übertragenden Verbindung bereits während des Verfahrensschrittes a), spätestens jedoch vor dem Verfahrensschritt d).

Die erfindungsgemäßen Celluloseether besitzen drei verschiedene Ethersubstituenten und zwar Alkylgruppen, Hydroxyalkylgruppen und Sulfoalkylgruppen. Die Alkylgruppen besitzen eins bis drei Kohlenstoffatome. Bei den Hydroxyalkylgruppen handelt es sich um Hydroxyethyl- und Hydroxypropylgruppen. Bei den Sulfoalkylgruppen handelt es sich um Sulfoethyl- und Sulfopropylgruppen.

Der Zweck des nachfolgenden Absatzes ist es, die Bezeichnung "durchschnittlicher Substitutionsgrad (DS)" und "molarer Substitutionsgrad (MS)" zu erläutern. Im Cellulosemolekül befinden sich drei Hydroxylgruppen pro Anhydroglucoseeinheit. Unter dem DS ist die Durchschnittszahl der in der Cellulose substituierten Hydroxylgruppen pro Anhydroglucoseeinheit zu verstehen. Unter dem MS ist die Durchschnittszahl der Mole des mit der Cellulose kombinierten Reaktionspartners pro Anhydroglucoseeinheit zu verstehen. Für die Alkylgruppen tragenden Derivate der Cellulose sind DS und MS gleich. Dies gilt bei geringen Substitutionsgraden auch für Sulfoalkylgruppen. Für die Hydroxyalkylgruppen tragenden Derivate der Cellulose ist der MS im allgemeinen größer als der DS.

Die erfindungsgemäßen Celluloseether besitzen ein DS-_{Alkyl} von 1,0 bis 2,0, einen DS_{Sulfoalkyl} im Bereich von 0,004 bis 0,6 und einen MS-_{Hydroxyalkyl} im Bereich von 0,01 bis 1.

Die Molekulargewichte liegen in der Größenordnung zwischen 10000 und 500000. Die Viskositäten liegen zwischen 3 und 300 000 mPa·s (nach Höppler, 2-gew.%ige wäßrige Lösung, 20 °C).

Die erfindungsgemäßen Celluloseether können nach verschiedenen Verfahren hergestellt werden.
Ausgehend von einem Alkylhydroxyalkylcelluloseether, wie Methylhydroxyethylcelluloseether, erfolgt die Umsetzung mit einer Sulfoalkylgruppen übertragenden Verbindung. Dazu wird der gegebenenfalls feuchte Alkylhydroxyalkylcelluoseether mit einem Alkalisierungsmittel versetzt. Als Alkalisierungsmittel dient bevorzugt wäßrige Alkalilauge, wie Natronlauge. Die Konzentration des Alkalisierungsmittels kann sich über einen weiten Bereich erstrecken. Bevorzugt ist aber der Einsatz konzentrierter Alkalisierungsmittel, um den Wassergehalt nicht zu stark zu erhöhen. Die Konzentration für Alkalilauge liegt üblicherweise bei 50 Gew.-%. Während oder nach der Zugabe des Alkalisierungsmittels wird die Sulfoalkylgruppen übertragende Verbindung zugegeben. Geeignete Verbindungen sind z. B. Natriumvinylsulfonat, Chlorethansulfonsäure und Propansulton. Art und Menge der Verbindung richten sich nach der gewünschten Substitutionsart und dem gewünschten Substitutionsgrad. Die Sulfoalkylierung findet bei Temperaturen bis 90° C, bevorzugt 70 bis 90° C, statt. Nach durchschnittlich 20 Stunden ist die Sulfoalkylierung beendet.

Es ist jedoch auch denkbar, die erfindungsgemäßen Celluloseether ausgehend von einem Alkenylcellulosemischether, wie Allylhydroxyethylcelluloseether, durch Umsetzung mit Natriumhydrogensulfit herzustellen.

Bei dem bevorzugten Verfahren zur Herstellung der erfindungsgemäßen Celluloseether erfolgt die Veretherung der Cellulose in alkalischer Lösung mit wenigstens einer eine Alkylgruppe übertragenden Verbindung, wenigstens einer eine Hydroxyalkylgruppen übertragenden Verbindung und wenigstens einer eine Sulfoalkylgruppe übertragenden Verbindung. Gebräuchliche Alkylgruppen übertragende Verbindungen sind Alkylhalogenide, wie Methylchlorid und Ethylchlorid. Gebräuchliche Hydroxyalkylgruppen übertragende Verbindungen sind Alkylenoxide, wie Ethylenoxid, Propylenoxid und 1,2-Butylenoxid. Die Herstellung kann in Gegenwart eines Überschußes an Veretherungsmittel und/oder in Gegenwart eines Suspensionsmittels erfolgen. Geeignete Suspensionsmittel sind die üblicherweise in der Celluloseetherchemie verwendeten Suspensionsmittel, bevorzugt organische Lösungsmittel, wie Ether oder Kohlenwasserstoffe. Besonders geeignete Ether sind Dimethylether, Diethylether, Dimethylgykol oder cyclische Ether, wie Dioxan und Tetrahydrofuran. Geeignete Kohlenwasserstoffe sind Toluol und Hexan.
In seinem Ablauf entspricht das bevorzugte Verfahren weitgehend dem Verfahren zur Herstellung von Alkylhydroxyalkylcelluloseethern.

Nachfolgend werden die einzelnen Verfahrensschritte näher erläutert:

### a) Alkalisierung der Cellulose:

Üblicherweise wird gemahlener Zellstoff mit einer Korngröße von 0,3 mm eingesetzt.
Als Alkalisierungsmittel dient z. B. eine wäßrige Alkalihydroxydlösung, die üblicherweise in einer Konzentration von bis zu 50 Gew.-% eingesetzt wird. Die bei der Alkalisierung der Cellulose eingesetzte Menge an Alkalisierungsmittel liegt im Verhältnis 1,0 - 6,0 : 1,0, bezogen auf die molare Menge an Cellulose. Die Zugabe des Alkalisierungsmittels kann kontinuierlich oder portionsweise erfolgen. Um sicherzustellen, daß eine möglichst gleichmäßige Alkalisierung und anschließende Veretherung erfolgt, ist es von Vorteil, die Cellulose in einem Suspensionsmittel zu suspendieren. Die Gewichtsmenge an Suspensionsmittel liegt im Verhältnis zwischen 1,0 - 20,0, bezogen auf die Einwaage an Cellulose.

### b) Hydroxyalkylierung:

Während oder im Anschluß an die Alkalisierung der Cellulose erfolgt üblicherweise die Zugabe der Hydroxylgruppen übertragenden Verbindung. Art und Menge dieses Veretherungsmittels richtet sich nach der gewünschten Substitutionsart und dem gewünschten Substitutionsgrad. Die Hydroxyalkylierung findet bevorzugt in einem Temperaturbereich zwischen 60 und 90 °C statt.

### c) gegebenenfalls zusätzliche Alkalisierung:

Es hat sich gezeigt, daß es von Vorteil ist nach der Hydroxyalkylierung b) eine gewisse Menge an zusätzlichem Alkalisierungsmittel zuzugeben. Die Menge an Alkalisierungsmittel beträgt soviel, wie zum Erreichen des angestrebten Alkylierungsgrades notwendig ist. Je nach der zu Beginn der Reaktion eingesetzten Menge an Alkalisierungsmittel beträgt sie üblicherweise 0 - 5 mol pro mol Cellulose. Diese zusätzliche Alkalisierung findet bei einer Temperatur im Bereich zwischen 30 und 100 °C statt.

### d) Alkylierung:

Nach der Zugabe des zusätzlichen Alkalisierungsmittels wird das gewünschte Alkylgruppen übertragende Mittel zugegeben, wobei sich Art und Menge des Alkylgruppen übertragenden Mittels nach der gewünschten Substitutionsart und dem gewünschten Substitutionsgrad richten.

### e) Sulfoalkylierung:

Während oder im Anschluß an die Alkalisierung a) bzw. während oder im Anschluß an die Hydroxyalkylierung b) erfolgt die Zugabe der Sulfoalkylgruppen übertragenden Verbindung zu der Alkalicellulose bzw. der Hydroxyalkylcellulose. Die zugegebene Menge richtet sich nach dem gewünschten Substitutionsgrad und liegt üblicherweise im Bereich zwischen 0,01 bis 1,5 mol pro Mol Alkalicellulose. Die Sulfoalkylierung findet üblicherweise bei einer Temperatur zwischen 70 und 90 °C statt und ist nach ungefähr einer Stunde beendet.

### f) Reinigung:

Nach der Umsetzung mit den verschiedenen Veretherungsmitteln findet üblicherweise die Aufarbeitung des Reaktionsansatzes, d. h. die Reinigung des hergestellten Celluloseethers, statt. Der hergestellte Celluloseether wird gewaschen, wobei der Waschvorgang vom Löseverhalten des Celluloseethers abhängt. Celluloseether, die in heißem Wasser unlöslich sind, werden bevorzugt mit Wasser bei einer Temperatur von 95 - 100° C gewaschen.
Celluloseether, die im Bereich von 100 °C eine geringe Löslichkeit in Wasser besitzen, können mit salzhaltigem Wasser von den organischen Nebenprodukten befreit werden. Die Temperatur des Wachwassers beträgt 95 - 100 °C. Wesentlich ist hierbei, daß das Waschwasser so viel Salz, z. B. Kochsalz, enthält, daß der zu reinigende Celluloseether nicht oder nur zu ganz geringem Anteil in Lösung geht.
Üblicherweise werden Celluloseether mit guter Löslichkeit in Wasser bei ca. 100 °C, mit Gemischen aus Wasser und organischen Lösungsmitteln gewaschen. Geeignete organische Lösungsmittel sind wassermischbare Lösungsmittel, wie Alkohole, wassermischbare Ether und Ketone, wie Methanol, Äthanol, Isopropanol, Dimethylglykol, Dioxan, Tetrahydrofuran und Aceton.

Es ist auch möglich das Hydroxylgruppen übertragende Mittel und da Alkylgruppen übertragende Mittel gemeinsam zuzugeben (Schritte b und d). Eine zusätzliche Alkalisierung (Schritt c) ist dabei nicht erforderlich. Die zur Veretherung notwendige Menge an Alkalisierungsmittel wird in diesem Fall in Schritt a zugesetzt. Bei dieser Herstellungsmöglichkeit erfolgt die Zugabe des Sulfoalkylgruppen übertragenden Mittels (Schritt e) vor oder während der gemeinsamen Zugabe des Hydroxylgruppen übertragenden und des Alkylgruppen übertragenden Mittels (Schritte b und d).

Eine ebenfalls geeignete Herstellungsmöglichkeit der erfindungsgemäßen Celluloseether umfasst zunächst die Alkalisierung der Cellulose (Schritt a), anschließend die Zugabe der Hydroxylgruppen übetragenden Verbindung (Schritt b), nachfolgend die Zugabe der Sulfoalkylgruppen übertragenden Verbindung (Schritt e), gegebenenfalls anschließend Zugabe an zusätzlichem Alkalisierungsmittel (Schritt c) und danach die Zugabe der Alkylgruppen übertragenden Verbindung (Schritt d) erfolgt.

Die erfindungsgemäßen Celluloseether zeichnen sich im Vergleich zu Celluloseethern ohne Sulfoalkylgruppen durch eine Reihe von Vorteilen aus, die sich wie folgt zusammenfasen lassen:
- hohe Flocktemperatur allgemein,
- im speziellen läßt sich ein hohe Flocktemperatur schon bei geringem Sulfoalkylierungsgrad erreichen,
- geringe Empfindlichkeit der Flocktemperatur gegenüber pH-Wert-Schwankungen
Unter der Flocktemperatur wird die Temperatur verstanden, bei der eine 1 gew.-%ige Lösung des Cellulosethers noch 50 % der bei Raumtemperatur gemessenen Tranparenz aufweist.

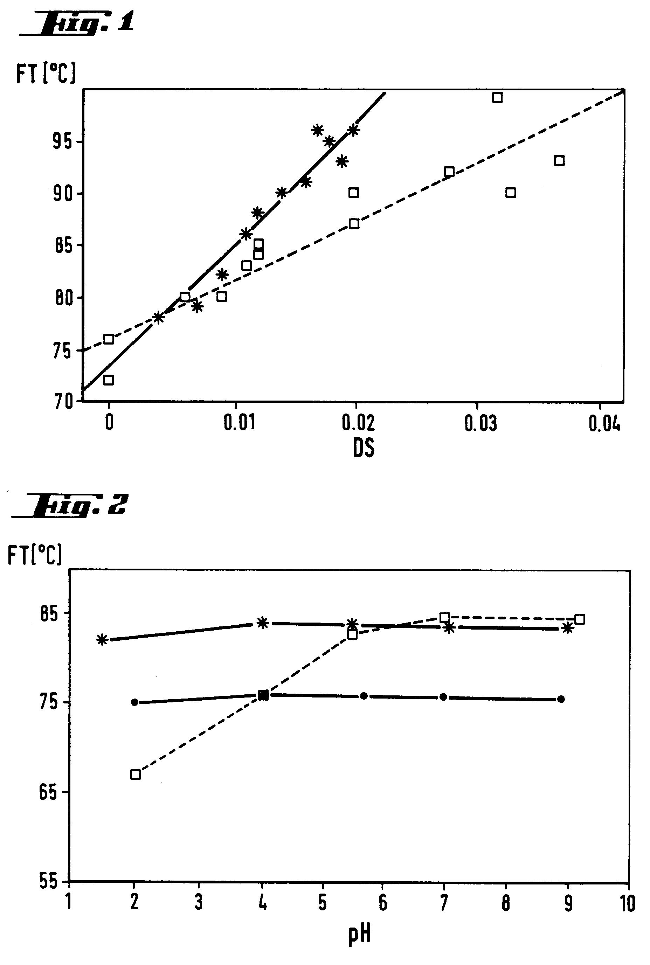

Fig. 1 zeigt die Abhängigkeit der Flocktemperatur (FT,°C) vom anionischen Substitutionsgrad (DS) der erfindungsgemäßen Methylhydroxyethylsulfoethylcelluloseether (MHESEC) im Vergleich zu Methylhydroxyethylcarboxymethylcelluloseethern (MHECMC).
Die eingesetzten Celluloseether besitzen folgende Kenndaten:
MHESEC (*): DS_{Alkyl} = 1,9; MS_{Hydroxyalkyl} = 0,12
MHECMC (□): DS_{Alkyl} = 1,6; MS_{Hydroxyalkyl} = 0,21
Unter dem anionischen Substitutionsgrad (DS) ist der Grad der Sulfoethylierung bzw. der Grad der Carboxymethylierung des Celluloseethers zu verstehen.
Die Messung erfolgt in einer 1,0 Gew.-%igen wäßrigen Lösung.

Die erfindungsgemäßen sulfoethylierten Celluloseether besitzen bei gleichem Substitutionsgrad eine höhere Flocktemperatur.

Fig. 2 zeigt die Abhängigkeit der Flocktemperatur (FT, °C) vom pH-Wert der Lösung der erfindungsgemäßen Celluloseether (MHESEC) im Vergleich zu anderen anionisch substituierten Celluloseethern (MHECMC) und nicht-ionischen Celluloseethern (MHEC).
Die eingesetzten Celluloseether besitzen folgende Kenndaten:
MHESEC (*): DS_{Alkyl} = 1,9; MS_{Hydroxyalkyl} = 0,12
MHECMC (□): DS_{Alkyl} = 1,6; MS_{Hydroxyalkyl} = 0,21
MHEC (·): DS_{Alkyl} = 1,7; MS_{Hydroxyalkyl} = 0,20
Die Messung erfolgt in einer 1 gew.-%igen wäßrigen Kochsalzlösung (0,3 Gew.-% Kochsalz, bezogen auf die Wassermenge und bei einer Aufheizrate von 3 °C/min).

Die beiden anionischen Celluloseether besitzen bei pH-Werten > 7 eine höhere Flocktemperatur als der nicht-ionische Celluloseether. Bei pH-Werten < 7 besitzen die erfindungsgemäßen Celluloseether eine deutlich höhere Flocktemperatur verglichen mit den carboxymethylierten Celluloseethern.

Die erfindungsgemäßen Celluloseether eignen sich als Zusatzmittel für Baustoffgemische wie Putze, Mörtel, Kleber und Spachtelmassen auf Gips-, Kalkhydrat- und Zementbasis. Es hat sich gezeigt, daß sich die erfindungsgemäßen Celluloseether durch ein verbessertes Wasserrückhaltevermögen (WRV) im Vergleich zu den bisher verwendeten Celluloseethern, insbesondere bei Temperaturen im Bereich von 30° C und darüber auszeichnen. Die eingesetzten erfindungsgemäßen Celluloseether besitzen bevorzugt einen DS_{Alkyl} von 1,0 bis 2,0, einen MS_{Hydroxyalkyl} von 0,01 bis 1 und einen DS_{Sulfoalkyl} von 0,004 bis 0,6. Sie besitzen weiterhin bevorzugt eine Viskosität im Bereich von 3 bis 300000 mPa.s (nach Höppler, 2 gew.-%ige wäßrige Lösung, 20° C) und eine Korngröße < 1 mm, bevorzugt im Bereich von < 0,2 mm. Die Celluloseether werden in einer Menge von 0,001 bis 5 Gew.-%, bezogen auf das Trockengewicht des Baustoffgemisches, eingesetzt.
Geeignete Celluloseether als Wasserrückhaltemittel sind auch Sulfoalkylcellulosether, Alkylsulfoalkylcelluloseether, insbesondere Methylsulfoethyl(MSEC) und Methylsulfopropylcelluloseether (MSPC). Diese Celluloseether sind z.B. aus US-A-3 357 971, US-A-2 795 508, US-A-2 583 657 und GB-PS-470 994 bekannt.
Die verwendeten Alkylsulfoalkylcelluloseether besitzen einen DS_{Alkyl} von 1 bis 2 und einen DS_{Sulfoalkyl} von 0,005 bis 0,6. Die Viskosität dieser Celluloseether liegt im Bereich zwischen 100 und 300000 mPa.s (nach Höppler, 2 gew-%ige wäßrige Lösung, 20° C) und eine Korngröße < 1 mm, bevorzugt im Bereich von < 0,2 mm. Die Alkylsulfoalkylcelluloseether werden in einer Menge von 0,001 Gew.-% bis 5 Gew.-% bezogen auf das Trockengewicht des Baustoffgemisches eingesetzt.

Die erfindungsgemäßen Celluloseether können auch in Kombination mit nicht-ionischen Celluloseethern, wie Methylcellulose (MC), Methylhydroxyethylcellulose (MHEC), Methylhydroxypropylcellulose (MHPC) und Ethylhydroxyethylcellulose (EHEC) eingesetzt werden.

Die Baustoffgemische auf Gips-, Kalkhydrat- und Zementbasis enthalten üblicherweise Hilfsstoffe und/oder Modifizierungsmittel.
Geeignete Hilfsstoffe sind Hydrokolloide, Luftporenbildner, Kuststoffdispersionspulver, Hydrophobiermittel, Quellmittel, Füllstoffe, Leichtzusatzstoffe, Verflüssiger sowie Verzögerer oder Beschleuniger.
Typische Füllstoffe sind Quarzsand, Kalksteinsand oder deren Mehle (Korngröße: 5µm - 5 mm).

Die Baustoffgemische auf Gips-, Kalkhydrat- und Zementbasis besitzen üblicherweise folgende Zusammensetzung (Trockenmasse):
- 99,99 - 1 Gew.-%: Gips, Kalkhydrat, Zementoder Kalkhydrat/Zement
- 0,001 - 5 Gew.-%: vorstehend genannte erfindungsgemäße und bekannte Celluloseether
- 0 - 90 Gew.-%: Quarzsand oder Kalksteinsand
- 0 - 10 Gew.-%: Kunststoffdispersionspulver
- 0 - 10 Gew.-%: Leichtzusatzstoffe
- 0 - 1 Gew.-%: Hydrophobierstoffe
- 0 - 0,5 Gew.-%: Stärkeether
- 0 - 0,1 Gew.-%: Luftporenbildner
Der so erhaltenen Trockenmasse wird soviel Wasser zugegeben, bis die gewünschte Konsistenz erreicht ist.

Die Erfindung wird im folgenden anhand von bevorzugten Herstellungsbeispielen und Anwendungsbeispielen näher erläutert.

Die Prozentangaben bedeuten Gewichtsprozent.

Es bedeuten:
M = Methyl
HE = Hydroxyethyl
SE = Sulfoethyl
NaVS = Natriumvinylsulfonat
△WRV = Abfall des Wasserrückhaltevermögens bei einer Temperaturerhöhung von 20 auf 40 °C in Prozentpunkten

### Herstellungsbeispiele

### Herstellung von Methylhydroxyethylsulfoethylcellulose (MHESEC)

162 g gemahlenen Zellstoffs werden in einem Lödigemischer mit einer Lösung von Natriumhydroxid in 200 ml Wasser alkalisiert. Es wird wäßrige Natriumvinylsulfonatlösung (25 - 30 %ig) zugegeben und ca. 15 Minuten weitergemischt. Nach überführen in ein druckfestes Rührgefäß, evakuieren und überlagern mit Stickstoff wird ein Gemisch von 1260 g Methylchlorid und 22 g Ethylenoxid aufgedrückt. Es wird ca. 60 Minuten bei 80 - 90 °C verethert. Das erhaltene Produkt wird mit heißem Wasser ausgewaschen, getrocknet und für den Anwendungstest fein gemahlen. Produkte, die in heißem Wasser löslich sind, werden mit 80 %igem Isopropanol weitgehend salzfrei extrahiert.

**Tabelle 1**

| Methyl-hydroxyethyl-sulfoethyl-cellulose (MHESEC) | | | | | | | | | |
|---|---|---|---|---|---|---|---|---|---|
| Beispiel | Einsatzmenge | | | Substitutionsgrad | | | Salzgehalt (%) | Viskosität (mPa.s) (2%) | Flocktemp. (°C) |
| Vergleichsbeispiel | NaOH (g) | NaVS (g) | (%) | M | HE | SE | | | |
| 1 | 154 | 5,2 | 25 | 1,79 | 0,12 | 0,004 | 0,02 | 24000 | 78 |
| 2 | 100 | 13,0 | 25 | 1,48 | 0,13 | 0,014 | 0,16 | 94000 | 90 |
| 3 | 100 | 10,8 | 30 | 1,40 | 0,15 | 0,014 | 0,52 | >100000 | 90 |
| 4 | 112 | 13,0 | 25 | 1,58 | 0,13 | 0,016 | 0,07 | 61000 | 91 |
| 5 | 134 | 10,8 | 30 | 1,75 | 0,12 | 0,011 | 0,43 | >100000 | 86 |
| 6 | 144 | 13,0 | 25 | 1,78 | 0,12 | 0,017 | 0,12 | 29000 | 96 |
| 7 | 154 | 13,0 | 25 | 1,78 | 0,12 | 0,018 | 0,14 | 27000 | 89 |
| 8 | 154 | 13,0 | 25 | 1,83 | 0,12 | 0,012 | 0,00 | 24000 | 88 |
| 9 | 100 | 26,0 | 25 | 1,45 | 0,14 | 0,016 | 0,16 | 72000 | >100 |
| 10 | 100 | 21,7 | 30 | 1,44 | 0,15 | 0,018 | 1,29 | >100000 | 95 |
| 11 | 112 | 26,0 | 25 | 1,62 | 0,15 | 0,018 | 0,11 | 67000 | >100 |
| 12 | 124 | 26,0 | 25 | 1,67 | 0,12 | 0,019 | 2,77 | 61000 | 93 |
| 13 | 134 | 26,0 | 25 | 1,66 | 0,11 | 0,020 | 1,81 | 32000 | 96 |
| 14 | 144 | 26,0 | 25 | 1,76 | 0,12 | 0,024 | 0,11 | 27000 | >100 |
| 15 | 154 | 26,0 | 25 | 1,90 | 0,12 | 0,025 | 0,54 | 32000 | >100 |
| 16 | 154 | 26,0 | 25 | 1,79 | 0,12 | 0,031 | 0,02 | 19000 | >100 |
| 17 | 154 | 52,0 | 25 | 1,85 | 0,12 | 0,057 | 0,99 | 24000 | >100 |
| 18 | 154 | 52,0 | 25 | 1,82 | 0,12 | 0,050 | 0,02 | 27000 | >100 |
| 1 | 154 | - | - | 1,78 | 0,12 | - | 0,28 | 20000 | 72 |

### Herstellung von Methylhydroxyethylsulfoethylcellulose (MHESEC)

176 g wasserfeuchte (46 % H₂O) Methylhydroxyethylcellulose (27,2 % OCH₃; 2,5 % OC₂H₄; bez. auf die Trockenmasse) werden in einem Kneter mit 8 g konzentrierter Natronlauge (49,5 %ig) behandelt. Es wird Natriumvinylsulfonatlösung (30 %ig) zugegeben und 20 Stunden bei 90 °C umgesetzt. Nach Neutralisation mit Essigsäure wird mit heißem Wasser gewaschen.

**Tabelle 2**

| Methylhydroxyethylsulfoethylcellulose (MHESEC) | | | | | | | |
|---|---|---|---|---|---|---|---|
| Beispiel | Einsatz NaVS (g) | Substitutionsgrad | | | Salzgehalt (%) | Viskosität (mPa.s) (1 %) | Flocktemp. (°C) |
| Vergleichsbeispiel | | M | HE | SE | | | |
| 19 | 21,5 | 1,64 | 0,09 | 0,007 | 0,0 | 4200 | 79 |
| 20 | 43,0 | 1,62 | 0,09 | 0,009 | 0,0 | 3499 | 82 |
| 2 | - | 1,67 | 0,11 | - | 0,0 | 2200 | 76 |

### Herstellung von Methylhydroxypropylsulfoethylcellulose (MHPSEC)

3000 g Fichtenzellstoff werden in einem Reaktionsmischer in 17 l 95 %igem Dimethylglykol oder Dioxan suspendiert. Nach überlagern mit Stickstoff wird mit 1450 g konz. Natronlauge (49,5 %ig) alkalisiert, wäßrige Natriumvinylsulfonatlösung (30 %ig) untergemischt, 313 g Propylenoxid zudosiert und 60 Minuten bei 90 bis 100 °C verethert. Nach Zugabe einer zweiten Portion konz. Natronlauge (2900 g) wird mit Methylchlorid (2722 g) 60 Minuten bei 100 °C umgesetzt. Das Suspensionsmittel wird abdestilliert und das Produkt einmal mit Wasser bei ca. 95 °C und anschließend mit 80 %igem wäßrigem Isopropanol nachgewaschen.

**Tabelle 3**

| Methylhydroxypropylsulfoethylcellulose (MHPSEC) | | | | | | | |
|---|---|---|---|---|---|---|---|
| Beispiel | Einsatz NaVS (g) | Substitutionsgrad | | | Salzgehalt (%) | Viskosität (mPa.s) (1 %) | Flocktemp. (%) |
| Vergleichsbeispiel | | M | HE | SE | | | |
| 21 | 193 | 1,60 | 0,06 | 0,018 | 0,46 | 4100 | >100 |
| 22 | 387 | 1,47 | 0,11 | 0,028 | 0,57 | 3400 | >100 |
| 23 | 387 | 1,47 | 0,11 | 0,028 | 5,08 | 2800 | >100 |
| 3 | - | 1,66 | 0,13 | - | 0,26 | 2200 | 70 |

### Herstellung von Methylsulfoethylcellulose (MSEC)

162 g gemahlenen Zellstoffs werden in einem Lödigemischer mit einer Lösung von Ätznatron in 200 ml Wasser alkalisiert. Es wird wäßrige Natriumvinylsulfonatlösung zugegeben und ca. 15 Minuten weitergemischt. Nach überführen in ein druckfestes Rührgefäß, evakuieren und überlagern mit Stickstoff werden 1260 g Methylchlorid aufgedrückt. Es wird ca. 60 Minuten bei 80 - 90 °C verethert. Das erhaltene Produkt wird mit heißem Wasser gewaschen, getrocknet und für den Anwendungstest fein gemahlen. Produkte, die in heißem Wasser nicht flocken, werden mit 80 %igem Isopropanol weitgehend salzfrei gewaschen.

**Tabelle 4**

| Methylsulfoethylcellulose (MSEC) | | | | | | | | |
|---|---|---|---|---|---|---|---|---|
| Beispiel | Einsatzmenge | | | Substitutionsgrad | | Salzgehalt (%) | Viskosität (mPa.s) (2 %) | Flocktemp. (°C) |
| Vergleichsbeispiel | NaOH (g) | NaVS (g) | (%) | M | SE | | | |
| 24 | 154 | 4,3 | 30 | 1,71 | 0,006 | 0,20 | 32000 | 63 |
| 25 | 154 | 10,8 | 30 | 1,77 | 0,012 | 0,22 | 45000 | 78 |
| 26 | 154 | 21,7 | 30 | 1,76 | 0,020 | 0,23 | 34000 | 95 |
| 27 | 154 | 32,5 | 30 | 1,78 | 0,034 | 1,40 | 17000 | 99 |
| 28 | 154 | 43,8 | 30 | 1,81 | 0,060 | 0,32 | 13000 | >100 |
| 29 | 154 | 65,7 | 30 | 1,77 | 0,076 | 4,41 | 9500 | >100 |
| 30 | 154 | 65,7 | 30 | 1,80 | 0,077 | 1,74 | 9200 | >100 |
| 4 | 154 | | | 1,87 | | 0,91 | 72000 | 56 |

### Anwendungsbeispiele

Das Wasserrückhaltevermögen (WRV) der nachfolgend aufgeführten Baustoffgemische, enthaltend die erfindungsgemäßen sulfoalkylierten Celluloseether und bekannte Alkylsulfoalkylcelluloseether sowie von zu Vergleichszwecken herangezogenen Baustoffgemischen werden wahlweise analog DIN 18555, Teil 7 (Prüfung von Mörteln mit mineralischen Bindemitteln) oder analog ASTM C 91 bestimmt:

### DIN 18555, Teil 7:

Zu 500 g Baustoffmischung werden definierte Mengen an carboxymethylierten Methylhydroxyethyl- oder Methylhydroxypropylcelluloseethern gegeben. Die erhaltenen Mischungen werden innerhalb von 15 sec. in die erforderliche Menge von 20 °C eingerührt und anschließend ca. 30 sec. mit einem Mörtelmischer bei mittlerer Geschwindigkeit weiter gerührt. Es wird soviel Wasser zugegeben, bis der hergestellte Frischmörtel eine Konsistenz aufweist, die einem Ausbreitmaß von 170 ± 5 mm entspricht (DIN 18555, Teile 2 und 8). Zur Bestimmung des Wasserrückhaltevermögens wird ein Plastikring mit einem Innendurchmesser von 140 mm und einer Höhe von 12 mm verwendet, der auf einen Zellstoffkarton (Zuschnitt 190 x 190 mm, Firma Schleicher & Schüll, Nr. 2727) aufliegt. Zwischen Plastikring und Zellstoffkarton befindet sich ein Faservlies (Druchmesser 185 mm, Firma Schleicher & Schüll, Nr. 0980). Für den eigentlichen Meßvorgang werden ca. 150 g der Baustoffmischung direkt nach dem oben beschriebenen Anrühren innerhalb von 5 sec. in den Platikring eingefüllt. Der überstehende Frischmörtel wird mit einem Spatel abgestreift; die im Ring befindliche Menge wird durch Auswaage genau bestimmt. Innerhalb einer Saugzeit von 5 Min. zieht der Zellstoffkarton Wasser aus der Masse ab; die genaue Menge wird durch Rückwägung des feuchten Kartons bestimmt. Das Faservlies dient lediglich dem Zweck, daß man nach 5 Minuten Saugzeit die Mörtelmasse besser vom Karton abnehmen kann. Das Waserrückhaltevermögen ist definiert als der prozentuale Anteil der verbleibenden Wassermenge im Verhältnis zur Gesamtmenge bei Versuchsbeginn.

### ASTM C 91:

Hierbei wird über ein Vakuum den angemachten Baustoffmischungen Wasser entzogen. Der Trockenmörtel wird mit einer vorgegebenen Wassermenge in einem Labormischer angerührt. Mit dem angemischten Frischmörtel füllt man eine Nutsche und setzt sie einem Vakuum aus (Zementputz: 6700 Pa Differenzdruck, 15 min.; Fliesenkleber: 8000 Pa Unterdruck, 3 min.). Das Waserrückhaltevermögen ist definiert als der prozentuale Gehalt der verbleibenden Wassermenge im Verhältnis zur Gesamtwassermenge bei Versuchsbeginn.

Tabelle 5 zeigt die Kenndaten der eingesetzten Baustoffgemische.
Als Luftporenbildner wird ®Hostapur OSB (Olefinsulfonat, Na-Salz) verwendet.
Der Stärkeether besitzt folgende Kenndaten: Hydroxypropylstärke, MS_{Hydroxypropyl}: 0,5, Kornfeinheit: < 200 µm, Viskosität: 20 mPas (2 %ige Lösung, Höppler Viskosimeter 20 °C).
Als Hydrophobiermittel wird Zinkstearat verwendet.
Als Kunststoffdispersionspulver dient ®Mowilith DM 200p.
Im Gipskleber wird ®Zeliquid GA 1 und im Gips/Kalkputz und Gipsputz wird Zeliquid GA 7 als Abbindeverzögerer verwendet.

Die Prüfung das Wasserrückhaltevermögen erfolgt bei 20 °C und bei 40 °C. Bei der höheren Temperatur wird sowohl das Arbeitsgerät, die Trockenmischung als auch da Anmachwasser auf 40 °C erwärmt.

**Tabelle 5**

| Zusammensetzung der eingesetzten Baustoffgemische (Gewichtsteile) | | | | | | |
|---|---|---|---|---|---|---|
| Komponenten | Gipsputz | Gips/Kalk Sandputz | Gipskleber | Fliesenkleber/Baukleber | Kalk/Zementputz | Einlagenzementputz |
| Stuckgips | 40 | 40 | 100 | - | - | - |
| Estrichgips | 49 | - | - | - | - | - |
| Kalkhydrat | 2 | 6 | - | - | 5 | 3 |
| Portlandzement | - | - | - | 40 | 13 | 15 |
| Kalksteinsand | 8 | 53 | - | - | 40 | 9 |
| Quarzsand | - | - | - | 60 | 40 | 73 |
| Perlite | 1 | 1 | - | - | 2 | - |
| Celluloseether | 0,22 | 0,18 | 0,7 | 0,6 | 0,12 | 0,10-0,12 |
| Luftporenbildner | 0,01 | 0,01 | - | - | 0,015 | 0,01 |
| Stärkeether | 0,02 | 0,02 | - | 0,05 | 0,02 | 0,02 |
| Hydrophobiermittel | - | - | - | - | - | 0,3 |
| Abbindeverzögerer | 0,1 | 0,1 | 0,2 | - | - | - |
| Kunststoff dispersionspulver | - | - | - | 1,5 | - | - |
| Wasser | 60 | 50 | 70 | 30 | 22 | 20 |

**Tabelle 6**

| Kenndaten der zu Vergleichszwecken und der Baustoffgemische eingesetzter Celluloseether | | | | |
|---|---|---|---|---|
| Vergleichsbeispiel | Art d. Ethers | MS HE/HP | DS | Viskosität (mPas, 2 %) |
| 5 | MHEC | 0,13 | 1,5 | 60000 |
| 6 | MHPC | 0,16 | 1,5 | 40000 |
| 7 | MHEC | 0,10 | 1,8 | 30000 |
| 8 | MHEC | 0,22 | 1,5 | 60000 |
| 9 | MC | - | 1,9 | 72000 |

**Tabelle 7**

| Wasserrückhaltevermögen (WRV) in Gipsputz (geprüft nach DIN 18555, Teil 7) | | | | |
|---|---|---|---|---|
| Beispiel | Art d. Ethers | WRV (%) | | ΔWRV |
| Vergleichsbeispiel | | 20 °C | 40 °C | |
| 14 | MHESEC | 94,8 | 92,6 | 2,2 |
| 5 | MHESEC | 99,0 | 97,7 | 1,3 |
| 21 | MHPSEC | 99,1 | 97,0 | 2,1 |
| 29 | MSEC | 98,9 | 98,0 | 0,9 |
| 9 | MC | 98,4 | 85,9 | 14,5 |
| 5 | MHEC | 99,5 | 95,0 | 4,5 |
| 6 | MHPC | 98,4 | 93,2 | 5,2 |

**Tabelle 8**

| Wasserrückhaltevermögen (WRV) im Gips-Kalk-Putz (geprüft nach DIN 18555, Teil 7) | | | | |
|---|---|---|---|---|
| Beispiel | Art d. Ethers | WRV (%) | | ΔWRV |
| Vergleichsbeispiel | | 20 °C | 40 °C | |
| 5 | MHESEC | 95,2 | 93,8 | 1,4 |
| 21 | MHPSEC | 94,4 | 92,0 | 2,4 |
| 29 | MSEC | 94,8 | 91,9 | 2,9 |
| 5 | MHEC | 95,9 | 90,2 | 5,7 |

**Tabelle 9**

| Wasserrückhaltevermögen (WRV) im Gipskleber (geprüft nach DIN 1855, Teil 7, Saugzeit: 30 Minuten) | | | | |
|---|---|---|---|---|
| Beispiel | Art d. Ethers | WRV (%) | | ΔWRV |
| Vergleichsbeispiel | | 20 °C | 40 °C | |
| 5 | MHESEC | 99,3 | 98,8 | 0,5 |
| 21 | MHPSEC | 99,5 | 98,9 | 0,6 |
| 5 | MHEC | 99,2 | 86,1 | 13,1 |

**Tabelle 10**

| Wasserrückhaltevermögen (WRV) im Fliesenkleber (geprüft nach ASTM C 91) | | | | |
|---|---|---|---|---|
| Beispiel | Art d. Ethers | WRV (%) | | ΔWRV |
| Vergleichsbeispiel | | 20 °C | 40 °C | |
| 5 | MHESEC | 99,7 | 99,1 | 0,6 |
| 21 | MHPSEC | 99,5 | 99,2 | 0,3 |
| 29 | MSEC | 98,9 | 98,9 | 0,5 |
| 5 | MHEC | 99,7 | 76,9 | 22,8 |

**Tabelle 11**

| Wasserrückhaltevermögen (WRV) im Kalk-Zement-Putz (geprüft nach ASTM C 91) | | | | |
|---|---|---|---|---|
| Beispiel | Art d. Ethers | WRV (%) | | ΔWRV |
| Vergleichsbeispiel | | 20 °C | 40 °C | |
| 5 | MHESEC | 95,4 | 93,6 | 1,8 |
| 21 | MHPSEC | 96,7 | 94,8 | 1,9 |
| 29 | MSEC | 95,8 | 93,9 | 1,9 |
| 5 | MHEC | 96,1 | 90,2 | 5,9 |
| 6 | MHPC | 94,2 | 89,7 | 4,5 |

**Tabelle 12**

| Wasserrückhaltervermögen (WRV) im Einlagenzementputz (geprüft nach ASTM C 91) | | | | |
|---|---|---|---|---|
| Beispiel | Art d. Ethers | WRV (%) | | ΔWRV |
| Vergleichsbeispiel | | 20 °C | 40 °C | |
| 4 | MHESEC | 96,4 | 91,9 | 4,5 |
| 12 | MHESEC | 96,8 | 96,0 | 0,8 |
| 5 | MHESEC | 99,7 | 98,9 | 0,8 |
| 7 | MHESEC | 96,1 | 95,9 | 0,2 |
| 11 | MHESEC | 97,1 | 93,5 | 3,6 |
| 13 | MHESEC | 97,9 | 97,8 | 0,1 |
| 15 | MHESEC | 96,3 | 95,9 | 0,4 |
| 17 | MHESEC | 96,1 | 96,0 | 0,1 |
| 21 | MHPSEC | 98,4 | 96,0 | 2,4 |
| 22 | MHPSEC | 98,5 | 96,7 | 1,8 |
| 24 | MSEC | 94,4 | 88,6 | 6,0 |
| 28 | MSEC | 93,1 | 92,3 | 0,8 |
| 29 | MSEC | 93,8 | 92,1 | 1,7 |
| 5 | MHEC | 98,9 | 89,4 | 9,5 |
| 6 | MHPC | 96,4 | 91,4 | 5,0 |
| 7 | MHEC | 94,7 | 87,5 | 7,2 |
| 8 | MHEC | 98,4 | 93,7 | 4,7 |

## Patentansprüche

1. Celluloseether, die wenigstens eine (C₁-C₃)-Alkylgruppe, wenigstens eine Hydroxyethyl- oder Hydroxypropylgruppe und wenigstens eine Sulfoethyl- oder Sulfopropylgruppe enthalten sowie einen DS_{Sulfoalkyl} von 0,004 bis 0,6 und einen MS_{Hydroxyalkyl} von 0,01 bis 1 besitzen.

2. Celluloseether gemäß Anspruch 1, dadurch gekennzeichnet, daß sie einen DS_{Alkyl} von 1,0 bis 2,0 besitzen.

3. Celluloseether gemäß Anspruch 1, dadurch gekennzeichnet, daß sie ein Molekulargewicht zwischen 10.000 und 500.000 besitzen.

4. Celluloseether gemäß Anspruch 1, dadurch gekennzeichnet, daß sie Viskositäten zwischen 3 und 300.000 mPas (gemessen nach Höppler, 2 gew.-%ige wäßrige Lösung, 20 °C) besitzen.

5. Verfahren zur Herstellung von Celluloseethern gemäß Anspruch 1 durch Veretherung von Cellulose in alkalischem Medium mit wenigstens einer eine (C₁-C₃)-Alkylgruppe übertragenden Verbindung, wenigstens einer eine Hydroxyethyl- oder Hydroxypropylgruppe übertragenden Verbindung und wenigstens einer eine Sulfoethyl- oder Sulfopropylgruppe übertragenden Verbindung, umfassend die Verfahrensschritte:
a) Alkalisierung der Cellulose,
b) während oder im Anschluß an a) Zugabe der Hydroxyethyl- bzw. Hydroxypropylgruppen übertragenden Verbindung,
c) gegebenenfalls im Anschluß an b) zusätzliche Zugabe von Alkalisierungsmittel und
d) während oder im Anschluß an b) oder gegebenenfalls c) Zugabe der (C₁-C₃)-Alkylgruppen übertragenden Verbindung,
e) die Zugabe der Sulfoethyl- oder Sulfopropylgruppen übertragenden Verbindung bereits während des Verfahrensschrittes a), spätestens jedoch vor dem Verfahrensschritt d).

6. Verfahren nach Anspruch 5, dadurch gekennzeichnet, daß die Zugabe der Sulfoethyl- bzw. Sulfopropylgruppen übertragenden Verbindung (Schritt e) und die Zugabe der Hydroxyethyl- bzw. Hydroxypropylgruppen übertragenden Verbindung (Schritt b) während der Alkalisierung der Cellulose (Schritt a) erfolgt und anschließend gegebenenfalls zusätzliches Alkalisierungsmittel zugegeben wird (Schritt c) und während oder im Anschluß an (c) die Zugabe der (C₁-C₃)-Alkylgruppen übertragenden Verbindung (Schritt d) erfolgt.

7. Verfahren nach Anspruch 5, dadurch gekennzeichnet, daß zunächst Schritt a), anschließend Schritt b), anschließend Schritt e), gegebenenfalls anschließend Schritt c) und anschließend Schritt d) erfolgt.

8. Verfahren nach Anspruch 5, dadurch gekennzeichnet, daß die hergestellten Celluloseether nach der Alkylierung gereinigt werden (Schritt f).

9. Verfahren nach Anspruch 5, dadurch gekennzeichnet, daß die Verfahrensschritte a) bis e) in Gegenwart eines Suspensionsmittel durchgeführt werden.

10. Verfahren nach Anspruch 10, dadurch gekennzeichnet, daß ein organisches wassermischbares Lösungsmittel als Suspensionsmittel eingesetzt wird.

11. Verfahren zur Herstellung der Celluloseether gemäß Anspruch 1 durch Veretherung von (C₁-C₃)-Alkylhydroxyethylcelluloseethern oder -hydroxypropylcelluloseethern in alkalischem Medium mit wenigstens einer eine Sulfoethyl- oder Sulfopropylgruppe übertragenden Verbindung, dadurch gekennzeichnet, daß die Veretherung bei einem pH-Wert oberhalb von 7, vorzugsweise von 12 bis 14, und einer Temperatur bis 90 °C, bevorzugt 70 bis 90 °C, durchgeführt wird.

12. Verwendung von Celluoseethern gemäß Anspruch 1 als Zusatz zu Baustoffgemischen auf Gips-, Kalkhydrat- oder Zementbasis.

## Claims

1. Cellulose ethers which contain at least one (C₁-C₃)alkyl group, at least one hydroxyethyl or hydroxypropyl group and at least on sulfoethyl or sulfopropyl group and have a DS_{sulfoalkyl} of 0.004 to 0.6 and a MS_{hydroxyalkyl} of 0.01 to 1.

2. Cellulose ethers as claimed in claim 1, characterized in that they have a DS_{alkyl} of 1.0 to 2.0.

3. Cellulose ethers as claimed in claim 1, characterized in that they have a molecular weight of between 10,000 and 500,000.

4. Cellulose ethers as claimed in claim 1, characterized in that they have viscosities of between 3 and 300,000 mPas (measured according to Höppler, 2% by weight aqueous solution, 20 °C).

5. A process for preparing cellulose ethers as claimed in claim 1, by etherification of cellulose in an alkaline medium with at least one compound transferring a (C₁-C₃)alkyl group, at least one compound transferring a hydroxyethyl or hydroxypropyl group and at least one compound transferring a sulfoethyl or sulfopropyl group, comprising the process steps of:
a) alkalizing the cellulose
b) adding the compound transferring hydroxyl groups during or subsequently to a),
c) if necessary, adding further alkalizing agent subsequently to b),
d) adding the compound transferring (C₁-C₃)alkyl groups during or subsequently to b) or, if appropriate, c), and
e) adding the compound transferring sulfoethyl or sulfopropyl groups already during process step a), but at the latest before process step d).

6. The process as claimed in claim 5, characterized in that the addition of the compound transferring sulfoethyl or sulfopropyl groups (step e) and the addition of the compound transferring hydroxethyl or hydroxypropyl groups (step b) are made during the alkalization of the cellulose (step a), and subsequently, if necessary, further alkalizing agent is added (step c), and the addition of the compound transferring (C₁-C₃)alkyl groups (step d) is made during or subsequently to (c).

7. The process as claimed in claim 5, characterized in that step a) is carried out first, followed by step b), followed by step e), followed if necessary by step c) and then by step d).

8. The process as claimed in claim 5, characterized in that the cellulosed ethers prepared are purified after the alkylation (step f).

9. The process as claimed in claim 5, characterized in that the process steps a) to e) are carried out in the presence of a suspending agent.

10. The process as claimed in claim 9, characterized in that the suspending agent used is an organic, water-miscible solvent.

11. A process for preparing the cellulose ethers as claimed in claim 1, by etherification of (C₁-C₃)alkyl hydroxyethyl cellulose ethers of (C₁-C₃)hydroxypropyl cellulose ethers in an alkaline medium with at least one compound transferring a sulfoethyl or sulfoproply group, characterized in that the etherification is carried out at a pH above 7, preferably at a pH of 12 to 14, and at a temperature of up to 90 °C, preferably of 70 to 90 °C.

12. The use of cellulose ethers as claimed in claim 1 as additives for building material mixes based on gypsum, hydrated lime or cement.

## Revendications

1. Ethers cellulosiques, qui contiennent au moins un groupe alkyle en C₁-C₃, au moins un groupe hydroxyéthyle ou hydroxypropyle et au moins un groupe sulfoéthyle ou sulfopropyle et qui ont un DS_{sulfoalkyle} de 0,004 à 0,6 et un MS_{hydroxyalkyle} de 0,01 à 1.

2. Ethers cellulosiques selon la revendication 1, caractérisés en ce qu'ils ont un DS_{alkyle} de 1,0 à 2,0.

3. Ethers cellulosiques selon la revendication 1, caractérisés en ce qu'ils ont une masse moléculaire comprise entre 10 000 et 500 000.

4. Ethers cellulosiques selon la revendication 1, caractérisés en ce qu'ils ont des viscosités comprises entre 3 et 300 000 mPas (mesurée selon Höppler, solution aqueuse à 2 %, à 20 °C).

5. Procédé de préparation d'éthers cellulosiques selon la revendication 1, par éthérification de cellulose en milieu alcalin avec au moins un composé de transfert de groupes alkyle en C₁-C₃, au moins un composé de transfert de groupes hydroxyéthyle ou hydroxypropyle et au moins un composé de transfert de groupes sulfoéthyle ou sulfopropyle, comprenant les étapes de procédé :
a) alcalisation de la cellulose,
b) pendant ou suite à a), l'addition du composé de transfert de groupes hydroxyéthyle ou hydroxypropyle,
c) le cas échéant suite à b), l'addition supplémentaire d'agents d'alcalisation et
d) pendant ou suite à b), ou le cas échéant c), l'addition du composé de transfert de groupes alkyle en C₁-C₃,
e) l'addition du composé de transfert des groupes sulfoéthyle ou sulfopropyle déjà dans l'étape a), toutefois, au plus tard avant l'étape d).

6. Procédé selon la revendication 5, caractérisé en ce que l'on ajoute le composé de transfert des groupes sulfopropyle et sulfoéthyle (étape e) et le composé de transfert des groupes hydroxyéthyle et hydroxypropyle (étape b) dans l'alcalisation de la cellulose (étape a), et ensuite on ajoute, le cas échéant, un agents d'alcalisation supplémentaire (étape c) et pendant ou suite à c), on ajoute le composé de transfert de groupes alkyle en C₁-C₃.

7. Procédé selon la revendication 5, caractérisé en ce que on met en oeuvre d'abord l'étape a), puis l'étape b), puis l'étape e), puis le cas échéant l'étape c) et puis l'étape d).

8. Procédé selon la revendication 5, caractérisé en ce que l'on purifie les éthers cellulosiques préparés après l'alkylation (étape f).

9. Procédé selon la revendication 5, caractérisé en ce que l'on met en oeuvre les étapes a) à e) dans un milieu de suspension.

10. Procédé selon la revendication 9, caractérisé en ce que l'on utilise un solvant organique miscible à l'eau comme milieu de suspension.

11. Procédé de préparation des éthers cellulosiques selon la revendication 1, par éthérification d'éthers alkylhydroxyéthylcellulosiques en C₁-C₃ ou alkylhydroxypropylcellulosiques en C₁-C₃ en milieu alcalin avec au moins un composé de transfert de groupes sulfoéthyle ou sulfopropyle, caractérisé en ce que l'on met en oeuvre l'éthérification à une valeur de pH supérieure à 7, de préférence de 12 à 14, et à une température jusqu'à 90 °C, de préférence de 70 à 90 °C.

12. Utilisation d'éthers cellulosiques selon la revendication 1, comme additifs aux mélanges de matériaux de construction à base de plâtre, de chaux hydratée ou de ciment.
